# EUROPÄISCHE PATENTANMELDUNG

(11) **EP 3 470 444 A1**
(43) Veröffentlichungstag der Anmeldung: **17.04.2019**
(21) Anmeldenummer: 18197719.0
(22) Anmeldetag: 28.09.2018
(51) Int. Cl.: C08G 18/02, C08G 18/79, C08G 18/18, C09D 175/04

(54) **VERFAHREN ZUR HERSTELLUNG VON ISOCYANURATGRUPPEN AUFWEISENDEN POLYISOCYANATEN UND IHRE VERWENDUNG**

(30) Priorität: 13.10.2017 EP 17196273
(71) Anmelder: BASF SE, 67056 Ludwigshafen am Rhein (DE)
(72) Erfinder: LUCAS, Frederic, 67056 Ludwigshafen (DE); HOECKER, Johannes David, 67056 Ludwigshafen (DE)
(74) Vertreter: BASF IP Association

(57) **Zusammenfassung**

Die vorliegende Erfindung betrifft neue Katalysatoren zur Herstellung von Isocyanuratgruppen aufweisenden Polyisocyanaten durch eine partielle Trimerisierung von (cyclo)aliphatischen Diisocyanaten.

## Beschreibung

Die vorliegende Erfindung betrifft ein neues Verfahren zur Herstellung von Isocyanuratgruppen aufweisenden Polyisocyanaten durch eine partielle Trimerisierung von (cyclo)aliphatischen Diisocyanaten in Gegenwart mindestens eines Trimerisierungskatalysators, welcher mindestens ein Salz bestehend aus einem tetrasubstituierten Ammonium- oder Phosphoniumkation und einem Phosphinatanion umfasst, und die Verwendung der so erhältlichen Isocyanuratgruppen aufweisenden Polyisocyanate als Polyisocyanatkomponente in Polyurethanlacken.

Verfahren zur partiellen oder vollständigen Trimerisierung von organischen Polyisocyanaten zur Herstellung von Isocyanuratgruppen aufweisenden Polyisocyanaten oder zelligen oder kompakten Isocyanuratgruppen aufweisenden Polyurethanen sind bekannt und werden in zahlreichen Literaturveröffentlichungen beschrieben.

Aus DE-OS 29 16 201 (= US 4,454,317) sind Trimerisierungskatalysatoren aus einem quaternären, gegebenenfalls substituierten 2-Hydroxyethylammoniumkation und Säuren als Anion bekannt.

US 3,862,150 beschreibt Salze aus tertiären Aminen und α-substituierten Carbonsäuren als thermisch zersetzbare Katalysatoren, beispielsweise zur Urethanbildung, in denen als α-Substituenten Nitril-, Sulfonyl-, Sulfuryl-, Carbonyl-, Nitro- Acetyl- und Benzoylgruppen möglich sind. Durch die sich herausbildenden 1,3-Dicarbonylsysteme bzw. carbonylanalogen Systeme findet eine Decarboxylierung vereinfacht statt, so daß derartige Katalysatoren leicht desaktivieren, was den Temperaturbereich für deren Einsetzbarkeit nachteilig einschränkt.

Alkalimetallsalze von Carbonsäuren sind als Katalysatoren für die Trimerisierung von Isocyanaten bekannt.

Nachteilig ist jedoch die Anwesenheit von Wasser, bedingt durch die Herstellung aus der freien Säure und einem Alkalimetallhydroxid, im Isocyanat, da es mit den NCO-Gruppen zu Carbaminsäuregruppen reagieren kann, die nach Decarboxylierung Amine bilden, die wiederum zur Bildung von unerwünschten, weil meist unlöslichen, Harnstoffen führt.

Die Aufgabe der vorliegenden Erfindung bestand darin, einen Katalysator zur Herstellung von im wesentlichen farblosen Isocyanuratgruppen enthaltenden Polyisocyanaten bereitzustellen, welcher einen möglichst niedrigen Gehalt an Uretdion-Strukturen im Polyisocyanat ermöglicht. Weiterhin soll der Katalysator über einen breiten Temperaturbereich anwendbar sein und eine einheitliche Struktur aufweisen.

Diese Aufgabe wurde gelöst durch ein Verfahren zur Herstellung von Isocyanuratgruppen-enthaltenden Polyisocyanaten durch zumindest teilweise Trimerisierung von (cyclo)aliphatischen Diisocyanaten in dem man die Umsetzung in Gegenwart mindestens eines Trimerisierungskatalysators welcher mindestens ein Salz bestehend aus einem tetrasubstituierten Ammonium- oder Phosphoniumkation und einem Phosphinatanion umfasst, durchführt.

Bevorzugte Ammonium- oder Phosphoniumkation sind substituiert mit vier Kohlenwasserstoffresten.

Kohlenwasserstoffreste sind dabei Substituenten, die ausschließlich aus Kohlenstoff- und Wasserstoffatomen bestehen.

Ein bevorzugter Gegenstand der Erfindung ist ein Verfahren zur Herstellung von Isocyanuratgruppen aufweisenden Polyisocyanaten durch zumindest partielle Trimerisierung von aliphatischen oder/und cycloaliphatischen Diisocyanaten in Gegenwart mindestens eines Trimerisierungskatalysators und anschließend gegebenenfalls Desaktivierung des Trimerisierungskatalysators nach Erreichen des angestrebten Trimerisierungsgrads, in dem man als Trimerisierungskatalysator mindestens eine Verbindung der Formel (I) einsetzt, 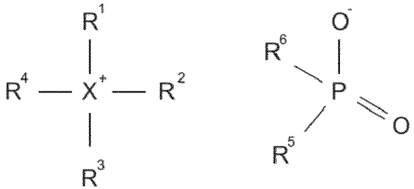 worin
X Stickstoff oder Phosphor ist,
R1, R², R³, R⁴, R⁵ und R⁶ unabhängig voneinander jeweils gleich oder verschieden sein können und für eine geradkettige oder verzweigte C₁- bis C₂₀-Alkylgruppe, eine gegebenenfalls substituierte C₅- bis C₁₂-Cycloalkylgruppe, eine gegebenenfalls substituierte C₇- bis C₁₀-Aralkylgruppe, oder eine gegebenenfalls substituierte C₆-C₁₂-Arylgruppe stehen oder zwei oder mehr der Reste R¹ bis R⁴ gemeinsam miteinander eine 4-, 5- oder 6-gliedrige Alkylenkette bilden oder zusammen mit einem Stickstoffatom oder einem Phosphoratom einen 5- oder 6-gliedrigen Ring bilden, der noch ein zusätzliches Stickstoff- oder Sauerstoffatom als Brückenglied enthalten kann oder gemeinsam ein mehrgliedriges, vorzugsweise sechsgliedriges Mehrringsystem, vorzugsweise Zweiringsystem bilden, das noch ein oder mehrere zusätzliche Stickstoffatome, Sauerstoffatome oder Stickstoff- und Sauerstoffatome als Brückenglieder enthalten kann und
R⁵ und R⁶ zusätzlich Wasserstoff, gegebenenfalls durch ein oder mehrere Sauerstoff- und/oder Schwefelatome und/oder ein oder mehrere substituierte oder unsubstituierte Iminogruppen unterbrochene oder durch funktionelle Gruppen, Aryl, Alkyl, Aryloxy, Alkyloxy, Halogen, Heteroatome und/oder Heterocyclen substituierte C₁-C₂₀-Alkyl oder C₆ bis C₁₂-Aryl
sein können.
Darin bedeuten
eine geradkettige oder verzweigte C₁- bis C₂₀-Alkylgruppe beispielsweise Methyl, Ethyl, Propyl, Isopropyl, n-Butyl, iso-Butyl, sec-Butyl, tert.-Butyl, Pentyl, Hexyl, Heptyl, Octyl, 2-Etylhexyl, 2,4,4-Trimethylpentyl, Decyl, 1,1-Dimethylpropyl, 1,1-Dimethylbutyl oder 1,1,3,3-Tetramethylbutyl,
eine gegebenenfalls substituierte C₅- bis C₁₂-Cycloalkylgruppe, Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,
eine gegebenenfalls substituierte C₇- bis C₁₀-Aralkylgruppe beispielsweise Benzyl, 1-Phenylethyl, 2-Phenylethyl, α,α-Dimethylbenzyl, Benzhydryl, p-Tolylmethyl,1-(p-Butylphenyl)-ethyl, o-, m- oder p-Chlorbenzyl, 2,4-Dichlorbenzyl, o-, m- oder p-Methoxybenzyl oder o-, m- oder p-Ethoxybenzyl,
eine gegebenenfalls substituierte C₆-C₁₂-Arylgruppe beispielsweise Phenyl, 2-, 3- oder 4-Methylphenyl, α-Naphthyl oder β-Naphthyl,
gegebenenfalls durch ein oder mehrere Sauerstoff- und/oder Schwefelatome und/oder ein oder mehrere substituierte oder unsubstituierte Iminogruppen unterbrochene oder durch funktionelle Gruppen, Aryl, Alkyl, Aryloxy, Alkyloxy, Halogen, Heteroatome und/oder Heterocyclen substituierte C₁-C₂₀-Alkyl beispielsweise 2-Carboxyethyl, 2-Cyanoethyl, 2-Cyanopropyl, 2-Methoxycarbonylethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 1-Hydroxy-1,1-dimethylmethyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl und
gegebenenfalls durch ein oder mehrere Sauerstoff- und/oder Schwefelatome und/oder ein oder mehrere substituierte oder unsubstituierte Iminogruppen unterbrochene oder durch funktionelle Gruppen, Aryl, Alkyl, Aryloxy, Alkyloxy, Halogen, Heteroatome und/oder Heterozyklen substituierte C₆ bis C₁₂-Aryl beispielsweise Tolyl, Xylyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Beispiele für R¹ bis R⁴ sind jeweils unabhängig voneinander Methyl, Ethyl, n-Propyl, Isopropyl, n-Butyl, sec-Butyl, tert.-Butyl, Pentyl, Hexyl, Heptyl, Octyl, 2-Etylhexyl, Phenyl, α- oder β-Naphthyl, Benzyl, Cyclopentyl oder Cyclohexyl.

Bilden zwei oder mehr der Reste R¹ bis R⁴ einen Ring, so können diese beispielsweise 1,4-Butylen, 1,5-Pentylen, 3-Oxa-1,5-pentylen, 3-Aza-1,5-pentylen oder 3-Methyl-3-aza-1,5-pentylen sein.

Bevorzugt für die Reste R¹ bis R⁴ sind unabhängig voneinander Methyl, Ethyl, Propyl, Isopropyl, n-Butyl, tert.-Butyl, Phenyl und Benzyl, besonders bevorzugt sind Methyl, Ethyl, n-Butyl, Phenyl und Benzyl, ganz besonders bevorzugt sind Methyl, Ethyl und n-Butyl und insbesondere Methyl.

Beispiele für R⁵ und R⁶ sind unabhängig voneinander Wasserstoff, Methyl, Ethyl, n-Propyl, n-Butyl, tert.-Butyl, Pentyl, Hexyl, Heptyl, Octyl, 2-Etylhexyl, Phenyl, α- oder β-Naphthyl, Benzyl, Cyclopentyl, Cyclohexyl, Hydroxymethyl, 2-Hydroxyethyl, 2-Carboxyethyl, 2-Methoxycarbonylethyl, 2-Ethoxycarbonylethyl, 2-n-Butoxycarbonylethyl, 2,4,4-Trimethylpentyl oder 2-Cyanoethyl sein. Bevorzugt sind Wasserstoff, Methyl, Ethyl, n-Propyl, n-Butyl, tert.-Butyl, Cyclohexyl, Phenyl, 2-Carboxyethyl, 2,4,4-Trimethylpentyl und 2-Hydroxyethyl, besonders bevorzugt sind Wasserstoff, Methyl, Ethyl, n-Butyl, tert.-Butyl, Cyclohexyl, 2,4,4-Trimethylpentyl und Phenyl, ganz besonders bevorzugt sind Wasserstoff, Methyl, Ethyl, 2,4,4-Trimethylpentyl und n-Butyl und insbesondere 2,4,4-Trimethylpentyl und Ethyl.

Bilden die Reste R⁵ und R⁶ einen Ring, so können diese beispielsweise 1,4-Butylen, oder 1,5-Pentylen sein.

Beispiele für Ammonium- oder Phosphoniumkationen sind Tetraoctylammonium, Tetramethylammonium, Tetraethylammonium, Tetra-n-butylammonium, Trimethylbenzylammonium, Triethylbenzylammonium, Tri-n-butylbenzylammonium, Trimethylethylammonium, Tri-n-butylethylammonium, Triethylmethylammonium, Tri-n-butylmethylammonium, Di-iso-Propyl-diethylammonium, Di-iso-Propyl-ethyl-methylammonium, Di-iso-Propyl-ethyl-benzylammonium, N,N-Dimethylpiperidinium, N,N-Dimethylmorpholinium, N,N-Dimethylpiperazinium, N-Methyl-diazabicyclo[2,2,2]octan, Tetraoctylphosphonium, Tetramethylphosphonium, Tetraethylphosphonium, Tetra-n-butylphosphonium, Trimethylbenzylphosphonium, Triethylbenzylphosphonium, Tri-n-butylbenzylphosphonium, Tributyl(tetradecyl)phosphonium, Trimethylethylphosphonium, Tri-n-butylethylphosphonium, Tributyl(octyl)phosphonium, Triethylmethylphosphonium, Tri-n-butylmethylphosphonium, Trihexyl(tetradecyl)phosphonium, Di-iso-Propyl-diethylphosphonium, Di-iso-Propyl-ethyl-methylphosphonium, Di-iso-Propyl-ethyl-benzylphosphonium oder Triisobutyl(methyl)phosphonium. Bevorzugte Alkylammoniumionen sind Tetraoctylammonium, Tetramethylammonium, Tetraethylammonium und Tetra-n-butylammonium, besonders bevorzugt sind Tetramethylammonium und Tetraethylammonium und ganz besonders bevorzugt ist Tetramethylammonium.

Bevorzugte Phosphoniumionen sind Trihexyl(tetradecyl)phosphonium, Triisobutyl(methyl)phosphonium, Tributyl(tetradecyl)phosphonium, Tri-n-butylethylphosphonium, Tributyl(octyl)phosphonium, Tetra-n-butylphosphonium, besonders bevorzugt ist Trihexyl(tetradecyl)phosphonium.

Ringsysteme enthaltende Ammoniumionen sind beispielsweise methylierte, ethylierte oder benzylierte Piperazine, Piperidine, Morpholine, Chinuclidine oder Triethylendiamine.

Beispiele für das Phosphinatanion sind beispielsweise Diethylphosphinat, Diisobutylphosphinat, Dicyclohexylphosphinat und Bis-2,4,4-Trimethylpentylphosphinat. Bevorzugte Phosphinatanionen sind Diethylphosphinat und Bis-2,4,4-Trimethylpentylphosphinat.

Dabei spielt es bei chiralen Verbindungen erfindungsgemäß keine Rolle, welches Enantiomer oder Diastereomer eingesetzt wird, oder ob die Säuren racemisch eingesetzt werden.

Phosphinatanionen im Sinne dieser Schrift weisen die Struktureinheit OP(O⁻)R₂ auf, wobei die beiden Reste R organische Reste sind, welche gleich oder verschieden sein können. Diese Struktureinheit kann ein- oder mehrmals innerhalb eines Moleküls vorliegen, beispielsweise einbis sechsmal, bevorzugt ein- bis viermal, ganz besonders bevorzugt ein- bis dreimal, insbesondere ein- bis zweimal und speziell einmal.

Die erfindungsgemäßen Trimerisierungskatalysatoren sind in der Regel auch bei Temperaturen über 100 °C thermisch beständig und somit über einen Temperaturbereich von ungefähr 30 bis 160 °C katalytisch wirksam, wohingegen Säure-Base-Salze von tertiären Aminen bereits bei Temperaturen um 130 °C (s. US 3,862,150, Bsp. 2) zersetzt werden, wobei die Zersetzungsreaktion bereits bei wesentlich niedrigeren Temperaturen einsetzt, und quartäre Hydroxyalkylammoniumcarboxylate aufgrund ihrer thermischen Labilität in der Regel nur bei Temperaturen von 60 bis 80 °C verwendbar sind.

Höhere Trimerisierungstemperaturen, beispielsweise über 95 °C, werden jedoch häufig zur Trimerisierung von sterisch gehinderten Diisocyanaten, wie z.B. Isophorondiisocyanat oder 2-Butyl-2-ethyl-pentandiisocyanat-1,5, und insbesondere zur Herstellung höherer Oligomere angewandt, da dadurch höhere Raum-Zeit-Ausbeuten erreicht werden können. Die Reaktionsgeschwindigkeit der Trimerisierungsreaktion kann bei Verwendung der erfindungsgemäßen Trimerisierungskatalysatoren im Vergleich zu handelsüblichen Trimerisierungskatalysatoren, wie vorzugsweise N-(2-Hydroxypropyl)-N,N,N-Trimethylammonium-2-ethylhexanoat (DABCO TMR® der Firma Evonik mindestens beibehalten oder sogar erhöht werden. Zudem werden auch Isocyanuratgruppen aufweisende Polyisocyanate mit äußerst niedrigen Farbzahlen nach Hazen (DIN ISO 6271), z.B. vorzugsweise kleiner als 40 (bei HDI), bzw. unter 200, bevorzugt unter 100 (bei IPDI) erhalten.

Wie bereits dargelegt wurde, können die erfindungsgemäß verwendbaren Trimerisierungskatalysatoren nach bekannten Verfahren hergestellt werden. Zur Herstellung von Salz bestehend aus einem tetrasubstituierten Ammoniumkation und einem Phosphinatanion, können tertiäre Amine mit einem Alkylierungsmittel, beispielsweise Alkylhalogeniden, Dialkylcarbonaten oder Dialkylsulfaten, in Abwesenheit oder Gegenwart von Lösungsmitteln, z.B. Chlorbenzol, Toluol oder Xylol, bei Temperaturen von zweckmäßigerweise 100 bis 180 °C zur Reaktion gebracht werden. Gegebenenfalls kann die Reaktion unter Druck durchgeführt werden, wenn das eingesetzte Amin unter den Reaktionsbedingungen gasförmig ist.

Bevorzugte Alkylierungsmittel sind Methylchlorid, Ethylchlorid, Methyliodid, Dimethylcarbonat, Diethylcarbonat, Di-n-butylcarbonat, Dimethylsulfat und Diethylsulfat sowie ferner Benzylchlorid.

Als geeignete tertiäre Amine seien beispielhaft genannt: Trimethylamin, Triethylamin, Tri-n-butylamin, Ethyl-diisopropylamin, N,N'-Dimethyl-piperazin, N-Methoxyphenyl-piperazin, N-Methylpiperidin, N-Ethyl-piperidin, Chinuclidin und Trialkylamine, wie z.B. Trimethyl-, Triethyl- und Tripropylamin und vorzugsweise 1,4-Dimethyl-piperazin, N,N-Dimethylbenzylamin und Triethylendiamin.

Die nach der Alkylierung erhältlichen tetrasubstituierten Ammoniumionen mit der Abgangsgruppe des Alkylierungsmittels als Gegenion, wie beispielsweise Chlorid, lodid, Methylcarbonat oder Methylsulfat, können beispielsweise durch Behandeln mit einem Anionentauscher, in einer bevorzugten Ausführungsform in das tetrasubstituierte Ammoniumhydroxid überführt werden, das anschließend mit der Phosphinsäure neutralisiert werden kann. Die dabei entstehende Menge Wasser kann entweder im Katalysator belassen werden oder kann bevorzugt durch behandeln mit Trocknungsmittel, wie beispielsweise Molsieb oder Zeolith, oder Azeotropdestillation mit einem Schleppmittel, wie beispielsweise Cyclohexan, Benzol oder Toluol, entfernt bzw. abgereichert werden. In der Regel ist ein Wassergehalt des Katalysator von unter 0,5 Gew% für den Einsatz in der erfindungsgemäßen Reaktion ausreichend und wird angestrebt.

Die Anwesenheit von Wasser in der Reaktion führt in der Regel durch Hydrolyse der Isocyanate und Decarboxylierung der entstehenden Carbaminsäuren zu Aminen, die wiederum mit Isocyanaten zu schwerlöslichen, unerwünschten Harnstoffen reagieren.

Man kann auch einen direkten Austausch auf einer lonentauschersäule durchführen. Dazu wird ein basisches lonenaustauscherharz (z.B. Amberlyst®-, Dowex®-oder Sephadex®-Typ) mit Kalilauge oder Natronlauge aktiviert und mit dem gewünschten Phosphinsäurederivat beladen. Danach wird die Chromatographiesäule mit dem quart. Ammoniumsalz beschickt und eluiert. Das Eluat enthält das gewünschte quart. Ammoniumphosphinat. Das Lösemittel kann durch Anlegen von Vakuum entfernt werden.

Die Herstellung der erfindungsgemäßen Katalysatoren umfassend ein Salz bestehend aus einem tetrasubstituirten Ammoniumkation und einem Phosphinatanion kann beispielsweise analog den Arbeitsvorschriften erfolgen, wie in WO 02/079212, Seite 9, Zeile 15 bis Seite 11, Zeile 11.

Der erfindungsgemäße Katalysator kann in Substanz, als Lösung oder als Suspension eingesetzt werden.

Wird der Katalysator als Lösung eingesetzt, so wird, je nach Löslichkeit im verwendeten Lösungsmittel in der Regel eine 10 - 80 %ige, bevorzugt 10 - 50 %ig, besonders bevorzugt 15 - 45 %ig und ganz besonders bevorzugt 30 - 40 eine Gew%ige Lösung eingestellt.

Als Trimerisierungskatalysatoren können auch Gemische mit anderen bekannten Trimerisierungskatalysatoren eingesetzt werden, wobei diese in breiten Mengenverhältnissen, z.B. in Mengenverhältnissen von 90 : 10 bis 10 : 90, bevorzugt 80:20 bis 20:80 und besonders bevorzugt 60 : 40 bis 40 : 60 gemischt werden können.

Zur Herstellung der Isocyanuratgruppen aufweisenden Polyisocyanate werden die erfindungsgemäßen Trimerisierungskatalysatoren in Abhängigkeit von ihrer katalytischen Wirksamkeit zweckmäßigerweise in möglichst kleinen wirksamen Mengen, die experimentell auf einfache Weise ermittelt werden können, verwendet.

Im Allgemeinen gelangen beim erfindungsgemäßen Verfahren die Verbindungen der Formel (I) in einer Menge von 0,002 bis 1 Gew.-%, vorzugsweise von 0,005 bis 0,5 Gew.-% bezogen auf das Gewicht der (cyclo)aliphatischen Diisocyanate, zum Einsatz.

Das erfindungsgemäße Verfahren wird zweckmäßigerweise bei einer Temperatur im Bereich von 10 bis 150°C und Reaktionszeiten von 10 min - 6 Stunden, bevorzugt von 20 min bis 6 Stunden, besonders bevorzugt von 20 min bis 3 Stunden durchgeführt. Bei Temperaturen über 150 °C kann eine Verfärbung der Isocyanuratgruppen aufweisenden Polyisocyanate auftreten, z.B. bei längeren Reaktionszeiten.

Bei Verwendung der erfindungsgemäßen Trimerisierungskatalysatoren werden vorzugsweise Reaktionstemperaturen über 50 °C, besonders bevorzugt von 55 bis 120 °C angewandt und im wesentlichen farblose Trimerisierungsprodukte erhalten.

Die Trimerisierung kann kontinuierlich, halbkontinuierlich oder diskontinuierlich durchgeführt werden, bevorzugt diskontinuierlich.

In der Regel spielt es nur eine untergeordnete Rolle welche Komponenten vorgelegt oder zugegeben werden. Zumeist wird das zu trimerisierende Isocyanat zumindest teilweise, bevorzugt vollständig, vorgelegt und der mindestens eine Katalysator langsam und/oder portionsweise zugegeben, dann auf die gewünschte Reaktionstemperatur gebracht und der verbleibende Teil des Katalysators, gegebenenfalls portionsweise, zugegeben.

Eine alternative Herstellungsvariante verläuft wie folgt: Beim diskontinuierlichen Verfahren wird in einem Rührreaktor gearbeitet. Dabei wird die Mischung aus Diisocyanat und Katalysator üblicherweise bei ca. 40°C vorgelegt. Im Anschluss wird die Temperatur der Reaktionsmischung zur Initiierung der Trimerisierung auf 50 bis 140 °C, bevorzugt auf 55 bis 100 °C, erhöht. Alternativ kann der Katalysator auch zudosiert werden, nachdem das Diisocyanat die zur Reaktion notwendige Temperatur erreicht hat. Die Trimerisierung ist in der Regel exotherm, der Katalysator kann in reiner Form eingesetzt werden. Es ist auch möglich, den Katalysator in einem geeigneten Lösungsmittel zu lösen und in dieser Form zum Einsatz zu bringen.

Die kontinuierliche Trimerisierung wird zweckmäßigerweise in einer Reaktionsschlange unter kontinuierlicher, gleichzeitiger Zudosierung von Diisocyanat und des Katalysators bei 50 bis 160 °C und innerhalb von 30 Sekunden bis 4 Stunden durchgeführt. Eine Reaktionsschlange mit kleinem Durchmesser führt zur Erreichung hoher Stömungsgeschwindigkeiten und folglich guter Durchmischung. Weiterhin ist es vorteilhaft, das Diisocyanat / Katalysator-Gemisch vor Eintritt in die Reaktionsschlange auf ca. 50 bis 60°C zu erhitzen. Zur exakteren Dosierung und optimalen Durchmischung des Katalysators ist es weiterhin vorteilhaft, den Katalysator in einem geeigneten Lösungsmittel zu lösen. Geeignet sind prinzipiell solche Lösungsmittel, in denen der Katalysator eine gute Löslichkeit hat. Die kontinuierlich Trimerisierung kann auch in einer Kesselkaskade durchgeführt werden. Denkbar ist auch eine Kombination aus Kesselkaskade und Rohrreaktor.

Üblicherweise wird die Reaktion in einem unter den Reaktionsbedingungen inerten Gas oder Gasgemisch durchgeführt, beispielsweise solche mit einem Sauerstoffgehalt unter 2, bevorzugt unter 1, besonders bevorzugt unter 0,5 Vol%, bevorzugt sind Stickstoff, Argon, Helium, Stickstoff - Edelgas - Gemische, besonders bevorzugt ist Stickstoff.

Nach Erreichen des gewünschten Trimerisierungsgrads bzw. NCO-Gehalts oder Umsetzungsgrades (bezogen auf den NCO-Gehalt vor der Reaktion) der Isocyanurat/(cyclo)aliphatische Diisocyanat-Reaktionsmischung, wobei der Umsatzgrad zweckmäßigerweise im Bereich von 10 bis 45 % der NCO-Gruppen, vorzugsweise von 10 bis 35 % der NCO-Gruppen, liegt und wozu üblicherweise Reaktionszeiten von 0,05 bis 6 Stunden, vorzugsweise von 10 min bis 3 Stunden, erforderlich sind, kann die Trimerisierungsreaktion beispielsweise durch eine Desaktivierung des Trimerisierungskatalysators beendet werden.

Das Produkt enthält neben monomerem Isocyanat Verbindungen, die einen oder auch mehrere Isocyanuratstrukturen aufweisen. Verbindungen dieser Art sind in der Literatur beschrieben.

Vorteilhaft weisen die nach dem erfindungsgemäßen Verfahren hergestellten Isocyanuratgruppen aufweisenden Polyisocyanate einen Uretdione-Gehalt kleiner 1 Gew.% auf.

Als Desaktivierungsmittel eignen sich beispielsweise anorganische Säuren, wie z.B. Chlorwasserstoff, phosphorige Säure oder Phosphorsäure, Carbonsäurehalogenide, wie z.B. Acetylchlorid oder Benzoylchlorid, Sulfonsäuren oder -ester, wie z.B. Methansulfonsäure, p-Toluolsulfonsäure, p-Toluolsulfonsäuremethyl- oder -ethylester, m-Chlorperbenzoesäure und vorzugsweise Dialkylphosphate wie z.B. Di-2-ethylhexylphosphat und insbesondere Dibutylphosphat sowie Di-2-ethylhexylphosphat.

Die Desaktivierungsmittel können, bezogen auf die Trimerisierungskatalysatoren, in äquivalenten oder überschüssigen Mengen verwendet werden, wobei die kleinste wirksame Menge, die experimentell ermittelt werden kann, schon aus wirtschaftlichen Gründen bevorzugt wird. Beispielsweise wird das Desaktivierungsmittel im Verhältnis zum Trimerisierungskatalysator von 1 - 2,5 : 1 mol/mol, bevorzugt 1 - 2 : 1, besonders bevorzugt 1 - 1,5 : 1 und ganz besonders bevorzugt 1 - 1,2 : 1 mol/mol eingesetzt.

Die Zugabe ist abhängig von der Art des Desaktivierungsmittels. So wird Chlorwasserstoff bevorzugt gasförmig über oder bevorzugt durch das Reaktionsgemisch hindurch geleitet, flüssige Desaktivierungsmittel werden zumeist in Substanz oder als Lösung in einem unter den Reaktionsbedingungen inerten Lösungsmittel und feste Desaktivierungsmittel in Substanz oder als Lösung oder Suspension in einem unter den Reaktionsbedingungen inerten Lösungsmittel zugegeben.

Die Zugabe des Desaktivierungsmittels erfolgt in der Regel bei der Reaktionstemperatur, kann aber auch bei niedrigerer Temperatur erfolgen.

Das erfindungsgemäße Verfahren wird vorzugsweise lösungsmittelfrei durchgeführt. Werden die (cyclo)aliphatischen Diisocyanate jedoch in Gegenwart von Lösungs- oder Verdünnungsmitteln partiell trimerisiert, so eignen sich hierfür sowohl inerte unpolare als auch inerte polare Lösungs- oder Verdünnungsmittel, wie z.B. Toluol, Xylol, cyclische Ether, Carbonsäureester und Ketone oder ihre Gemische.

Die nach dem erfindungsgemäßen Verfahren hergestellten Isocyanuratgruppen aufweisende Polyisocyanate können in an sich bekannter Weise, beispielsweise durch Dünnschichtdestillation bei einer Temperatur von 100 bis 180 °C, gegebenenfalls im Vakuum, gegebenenfalls zusätzlich mit Durchleiten von inertem Strippgas, oder Extraktion von gegebenenfalls vorhandenen Lösungs- oder Verdünnungsmittel und/oder vorzugsweise von überschüssigen, nicht-umgesetzten (cyclo)aliphatischen Diisocyanaten befreit werden, so daß die Isocyanuratgruppen aufweisenden Polyisocyanate mit einem Gehalt an monomeren Diisocyanaten von z.B. unter 1,0 Gew.-%, vorzugsweise unter 0,5 Gew.-%, besonders bevorzugt unter 0,3 Gew.-%, ganz besonders bevorzugt unter 0,2 Gew.-% und insbesondere nicht mehr als 0,1 Gew-% erhältlich sind.

Es stellt einen Vorteil der nach dem erfindungsgemäßen Verfahren hergestellten Isocyanuratgruppen aufweisende Polyisocyanate dar, dass sie nur sehr wenig Uretdione Strukuren aufweisen. Die nach dem erfindungsgemäßen Verfahren hergestellten Isocyanuratgruppen aufweisenden Polyisocyanate weisen daher eine hohe Lagerstabilität und eine niedrige Toxizität auf.

Weiterhin vorteilhaft ist, dass die im erfindungsgemäßen Verfahren eingesetzten Trimerisierungskatalysatoren eine gute Löslichkeit im Reaktionsgemsich aufweisen.

Ohne Abtrennung der überschüssigen monomeren Diisocyanate eignen sich die Isocyanuratgruppen aufweisende Polyisocyanate beispielsweise zur Herstellung von PU-Schaumstoffen, zelligen oder kompakten Elastomeren, Vergußmassen und Klebstoffen. Die monomerfreien und monomerhaltigen Isocyanuratgruppen aufweisenden Polyisocyanaten können ferner in an sich bekannter Weise durch Einführung von z.B. Urethan-, Allophanat-, Harnstoff-, Biuret- und/oder Carbodiimidgruppen modifiziert und/oder die Isocyanatgruppen mit geeigneten Blockierungsmitteln, wie z.B. • -Caprolactam, Malonsäuredimethylester, Acetessigester oder aromatischen Hydroxylgruppen blockiert werden.

Nach dem erfindungsgemäßen Verfahren können beliebige, organische Diisocyanate mit aliphatischen, cycloaliphatischen oder aliphatischen und cycloaliphatischen Isocyanatgruppen oder ihre Gemische trimerisiert werden.

Geeignete aliphatische Diisocyanate besitzen vorteilhafterweise 3 bis 16 C-Atome, vorzugsweise 4 bis 12 C-Atome im linearen oder verzweigtkettigen Alkylenrest und geeignete cycloaliphatische Diisocyanate vorteilhafterweise 4 bis 18 C-Atome, vorzugsweise 6 bis 15 C-Atome im Cycloalkylenrest. Beispielhaft genannt seien:
1,4-Diisocyanato-butan, 2-Ethyl-1,4-diisocyanato-butan, 1,5-Diisocyanato-pentan, 2-Methyl-1,5-diisocyanato-pentan, 2,2-Dimethyl-1,5-diisocyanato-pentan, 2-Propyl-2-ethyl-1,5-diisocyanato-pentan, 2-Butyl-2-ethyl-1,5-diisocyanato-pentan, 2-Alkoxymethylen-1,5-diisocyanato-pentan, 3-Methyl-, 3-Ethyl-1,5-diisocyanato-pentan, 1,6-Hexamethylen-diisocyanat, 2,4,4- bzw. 2,2,4-Trimethyl-1,6-hexamethylen-diisocyanat, 1,7-Diisocyanatoheptan, 1,8-Diisocyanato-octan, 1,10-Diisocyanato-decan, 1,12-Diiso-cyanatododecan, 4,4'-Diisocyanato-dicyclohexylmethan, 2,4'-Diisocyanato-dicyclohexylmethan sowie Gemische der Diisocyanato-dicyclohexylmethan-Isomeren, 1,3-Diisocyanato-cyclohexan sowie Isomerengemische von Diisocyanato-cyclohexanen und 1-Isocyanato-3-isocyanatomethyl-3,5,5-trimethylcyclohexan. Als (cyclo)aliphatische Diisocyanate vorzugsweise verwendet werden
1,6-Hexamethylen-diisocyanat, isomere aliphatische Diisocyanate mit 6 Kohlenstoffatomen im Alkylenrest sowie Mischungen davon, 2-Butyl-2-ethyl-1,5-diisocyanato-pentan und 1-Isocyanato-3-isocyanatomethyl-3,5,5-trimethylcyclohexan, besonders bevorzugt sind 1,6-Hexamethylen-diisocyanat und
1-Isocyanato-3-isocyanatomethyl-3,5,5-trimethylcyclohexan sowie Mischungen davon, beispielsweise im Verhältnis 10:90 - 90:10, bevorzugt 20:80 - 80:20 und besonders bevorzugt 33:67 - 67:33.

Selbstverständlich katalysieren die erfindungsgemäßen Katalysatoren auch die Trimerisierung aromatischer Isocyanate, sind jedoch für (cyclo)aliphatische Isocyanate bevorzugt.

Die erfindungsgemäßen neuen Trimerisierungskatalysatoren können zur Trimerisierung von nach beliebigen Verfahren, beispielsweise gemäß einem phosgenfreien oder einem unter Verwendung von Phosgen ablaufenden Verfahrensweg, hergestellten
(cyclo)aliphatischen Diisocyanaten verwendet werden.

Die erfindungsgemäß verwendbaren (cyclo)aliphatischen Diisocyanate können nach beliebigen Verfahren, beispielsweise durch Phosgenierung der entsprechenden Diamine und thermische Spaltung der intermediär gebildeten Dicarbaminsäurechloride hergestellt werden. Nach phosgenfreien Verfahren hergestellte (cyclo)aliphatische Diisocyanate enthalten als Nebenprodukte keine Chlorverbindungen und besitzen daher herstellungsbedingt ein grundsätzlich anderes Nebenproduktspektrum.

Selbstverständlich können auch Gemische von Isocyanaten, die nach dem Phosgenverfahren und nach phosgenfreien Verfahren hergestellt sind, eingesetzt werden.

Es zeigte sich, dass die erfindungsgemäß verwendbaren Trimerisierungskatalysatoren bei der Trimerisierung auch von nach dem Phosgenverfahren hergestellten (cyclo)aliphatischen Diisocyanaten eine gute katalytische Wirksamkeit aufweisen und Isocyanuratgruppen aufweisende Polyisocyanate mit niedriger Farbzahl ergeben.

Die in das erfindungsgemäße Verfahren einsetzbaren nach einem phosgenfreien Verfahren und insbesondere durch thermische Spaltung von (cyclo)aliphatischen Dicarbaminsäureestern erhältliche (cyclo)aliphatische Diisocyanate sind nicht beschränkt, wobei durch thermische Spaltung von (cyclo)aliphatischen Dicarbaminsäureestern erhältliche Diisocyanate aus der Gruppe 1,6-Hexamethylen-diisocyanat, 2-Butyl-2-ethyl-pentamethylen-diisocyanat-1,5 und 1-Isocyanato-3-isocyanatomethyl-3,5,5-trimethylcyclohexan insbesondere bevorzugt verwendet werden.

In einer bevorzugten Ausführungsform der Erfindung werden Isocyanate eingesetzt, die einen Gesamtchlorgehalt von 100 Gew.ppm oder weniger aufweisen, bevorzugt 80 Gew.-ppm oder weniger.

Nach diesen Verfahrensvarianten hergestellte Isocyanuratgruppen aufweisende Polyisocyanate eignen sich vorzüglich zur Herstellung von Polyurethan-Beschichtungen, z.B. von Textil- und Lederbeschichtungen, für -Dispersionen und -Klebstoffe und finden insbesondere Verwendung als Polyisocyanatkomponente in Ein- und Zweikomponenten-Polyurethansystemen für hochwertige, wetterbeständige Polyurethan-Lacke und high-solid-Lacke.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

### Beispiele

### Katalystor 1a (wie auf EP1727842)

Die Herstellung des Katalysators erfolgte durch Umsetzung von 2-Hydroxyisobuttersäure mit Trimethylbenzylammoniumhydroxid in methanolischer Lösung. Die methanolische Carbonsäurelösung wurde vorgelegt und das tetrasubstituierte Ammoniumhydroxid, gelöst in Methanol, wurde innerhalb von 30 min zugetropft. Nach vollständiger Zugabe des Ammoniumhydroxids wurde bei ca. 40°C 1 Stunde nachgerührt. Anschließend wurden im Rotationsverdampfer entstandenes Reaktionswasser und andere flüchtige Bestandteile entfernt. Der farblose Rückstand wurde in 2-ethylhexanol gelöst.

### Katalysator 1b

N-(2-Hydroxypropyl)-N,N,N-Trimethylammonium-2-ethylhexanoat (40%ig in Ethylenglycol) von Evonik - DABCO-TMR

### Katalysator 1c

Die Herstellung des Katalysators erfolgte durch Umsetzung von 27.6 g Natrium Ethylhexanoat (Alfa Aeser) mit 50.0 g Tetrabutylphosphoinum Chlorid (lolitec) in 600.0 g Methanol innerhalb von ca. 24 Stunden bei Raumtemperatur. Anschließend wurden im Rotationsverdampfer bei 40° C entstandenes Methanol entfernt und der weiße Niederschlag (Kochsalz) abfiltriert. Die beiden letzten Schritte wurden mehrfach wiederholt und ein farbloses Produkt erhalten.

### Katalysator 2a

Trihexyltetradecylphosphonium bis(2,4,4-trimethylpentyl)phosphinat von Cytek - Cyphos IL104

### Katalysator 2b

Die Herstellung von Tetramethylammoniumdiethylphosphinat erfolgte wie in X. Sun, Y. Dong, Y. Wang and Y. Chai, RSC Advances 2015, 5, 49500 - 49507 beschrieben.

Zu einer Lösung von Diethylphosphinsäure (10 g, 82 mmol, 1 eq; CAS: 813-76-3) in 100 mL Wasser wurde Tetramethylammoniumhydroxid (als 25 %ige Lösung in Wasser, 82 mmol, 1 eq) zugefügt bis der pH-Wert auf pH = 9 eingestellt war.

Die erhaltene klare Lösung wurde in einen Rotationsverdampfer gegeben und unter Vakuum Wasser und andere flüchtige Bestandteile entfernt, sodass ein farbloses Öl erhalten wurde. Dieses wurde über Nacht unter Hochvakuum weiter getrocknet. Man erhielt ein farbloses Öl (16 g, 82 mmol, 99%), welches ohne weitere Aufreinigung verwendet wurde.

### Vergleichs-Beispiel VB 1: Katalysator 1a

604.8 g frisch destilliertes Hexamethylendiisocyanat wurden entgast, bei 110°C unter Stickstoffatmosphäre vorgelegt und unter Rühren innerhalb von ca. 30 min mit 250 ppm Katalysator 1a (5%ig in 2-Ethylhexanol) versetzt. Nach eigenen Minuten fiel der NCO-Wert auf 44,0% und die Reaktion wurde dann durch Zugabe stöchiometrischer Mengen Phosphorsäure-bis-(2-ethylhexylester) gestoppt.

### Vergleichs-Beispiel VB 2: Katalysator 1a

500.0 g frisch destilliertes Hexamethylendiisocyanat wurden entgast, bei 80°C unter Stickstoffatmosphäre vorgelegt und unter Rühren innerhalb von ca. 30 min mit 200 ppm Katalysator 1a (5% in 2-Ethylhexanol) versetzt. Nach eigenen Minuten fiel der NCO-Wert auf 47,3% und die Reaktion wurde dann durch Zugabe stöchiometrischer Mengen Phosphorsäure-bis-(2-ethylhexylester) gestoppt.

### Vergleichs-Beispiel VB 3: Katalysator 1b

962.0 g frisch destilliertes Hexamethylendiisocyanat wurden entgast, bei 145°C unter Stickstoffatmosphäre vorgelegt und unter Rühren innerhalb von ca. 30 min mit 365 ppm Katalysator 1b (weiterverdünnt auf 12,5% in 2-Ethylhexanol) versetzt. Nach eigenen Minuten fiel der NCO-Wert auf 46,0% und die Reaktion wurde dann durch Zugabe stöchiometrischer Mengen Phosphorsäure-bis-(2-ethylhexylester) gestoppt.

### Vergleichs-Beispiel VB 4: Katalysator 1c

500.0 g frisch destilliertes Hexamethylendiisocyanat wurden entgast, bei 80°C unter Stickstoffatmosphäre vorgelegt und unter Rühren innerhalb von mehreren Stunden mit 3800 ppm (in 5 Portionen) von dem Katalysator 1c (5% in 2-Ethylhexanol) verstzt. Nach einigen Minuten fiel der NCO-Wert auf 40,8% und die Reaktion wurde dann durch Zugabe stöchiometrischer Mengen p-bis-(2-ethylhexylester) gestoppt.

### Erfindungsgemäßes Beispiel EB 1): Katalysator 2a

500,0 g frisch destilliertes Hexamethylendiisocyanat wurden entgast und bei 60°C unter Stickstoffabdeckung vorgelegt und unter Rühren innerhalb von ca. 30 min 3000 ppm von dem Katalysator 2a zugegeben. Nach eigenen Stunden fiel der NCO-Wert auf 42,6% und die Reaktion wurde dann mit stöchiometrischen Mengen Phosphorsäure-bis-(2-ethylhexylester) gestoppt.

### Erfindungsgemäßes Beispiel EB 2): Katalysator 2a

500,0 g frisch destilliertes Hexamethylendiisocyanat wurden entgast und bei 60°C unter Stickstoffabdeckung vorgelegt und unter Rühren innerhalb von ca. 30 min 3000 ppm von dem Katalysator 2a zugegeben. Nach eigenen Minuten fiel der NCO-Wert auf 46,1% und die Reaktion wurde dann mit stöchiometrischen Mengen Phosphorsäure-bis-(2-ethylhexylester) gestoppt.

### Erfindungsgemäßes Beispiel EB 3): Katalysator 2a

500,0 g frisch destilliertes Hexamethylendiisocyanat wurden entgast und bei 60°C unter Stickstoffabdeckung vorgelegt und unter Rühren innerhalb von ca. 30 min 3000 ppm von dem Katalysator 2a zugegeben. Nach eigenen Stunden fiel der NCO-Wert auf 41,8% und die Reaktion wurde dann mit stöchiometrischen Mengen Phosphorsäure-bis-(2-ethylhexylester) gestoppt.

### Erfindungsgemäßes Beispiel EB 4): Katalysator 2b

500,0 g frisch destilliertes Hexamethylendiisocyanat wurden entgast und bei 80°C unter Stickstoffabdeckung vorgelegt und unter Rühren innerhalb von ca. 30 min 100 ppm von dem Katalystor 2b zugegeben. Nach eigenen Minuten fiel der NCO-Wert auf 44,0% und die Reaktion wurde dann mit stöchiometrische Mengen para-toluolsulfonsäure und Phosphorsäure-bis-(2-ethylhexylester) gestoppt.

### Zusammensetzung der Reaktionsprodukte

Die Bestimmung der Zusammensetzung der Reaktionsprodukte erfolgt durch Gelpermeationschromatographie (GPC) mit TÜV-zertifizierten PMMA-Standards von PSS (Polymer Standards Service; DIN EN ISO 9001:2000, Zertifikat: 01 100 84065.). Diese Standards sind nach den Anforderungen von DIN 55672 und ISO/EN 13885 charakterisiert.

Die GPC erfolgt mit:
Gerät: PSS Agilent Technologies 1260 Infinity
Säulen: 1x PLGel Mixed E Guard (Vorsäule), Länge 5 cm, Durchmesser 0,75 cm 1x PLGel Mixed E, Länge 30 cm, Durchmesser 0,75 cm 1x PLGel Resipore, Länge 30 cm, Durchmesser 0,75 cm
Lösungsmittel: THF
Flussrate: 1 mL/min
Injektionsvolumen: 50 µL
Konzentration: 1 g/L
Temperatur: Raumtemperatur (20 °C)

| Referenz | Katalysator | HDI [Gew.-%] | HDI-Uretdion (Dimer) [Gew.-%] | HDI-Isocyanurat (Trimer) [Gew.-%] | HDI-Bis-isocyanurat (Pentamer) [Gew.-%] |
|---|---|---|---|---|---|
| VB1 | Kat 1a | 75,6 | 3,3 | 14,0 | 3,8 |
| VB2 | Kat 1a | 86,4 | 2,5 | 8,7 | 1,5 |
| VB3 | Kat 1b | 86,7 | 1,6 | 9,7 | 1,4 |
| VB4 | Kat 1c | 71,3 | 0,5 | 19,2 | 5,6 |
| EB1 | Kat 2a | 74,3 | < 0,2 | 17,4 | 4,9 |
| EB2 | Kat 2a | 88,1 | < 0,2 | 9,6 | 1,5 |
| EB3 | Kat 2a | 72,0 | < 0,2 | 18,5 | 5,8 |
| EB4 | Kat 2b | 75,5 | < 0,2 | 15,2 | 4,9 |

## Patentansprüche

1. Verfahren zur Herstellung von Isocyanuratgruppen-enthaltenden Polyisocyanaten durch zumindest teilweise Trimerisierung von (cyclo)aliphatischen Diisocyanaten, **dadurch gekennzeichnet, dass** man die Umsetzung in Gegenwart mindestens eines Trimerisierungskatalysators durchführt, welcher mindestens ein Salz bestehend aus einem tetrasubstituierten Ammonium- oder Phosphoniumkation und einem Phosphinatanion umfasst.

2. Verfahren zur Herstellung von Isocyanuratgruppen-enthaltenden Polyisocyanaten durch zumindest teilweise Trimerisierung von (cyclo)aliphatischen Diisocyanaten, **dadurch gekennzeichnet, dass** man als Trimerisierungskatalysator mindestens eine Verbindung der Formel (I) einsetzt, 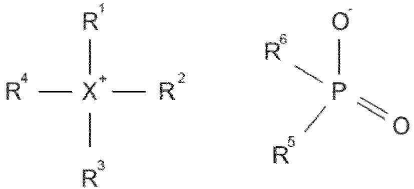 worin
X Stickstoff oder Phosphor ist,
R¹, R², R³, R⁴, R⁵ und R⁶ unabhängig voneinander jeweils gleich oder verschieden sein können und für eine geradkettige oder verzweigte C₁- bis C₂₀-Alkylgruppe, eine gegebenenfalls substituierte C₅- bis C₁₂-Cycloalkylgruppe, eine gegebenenfalls substituierte C₇- bis C₁₀-Aralkylgruppe, oder eine gegebenenfalls substituierte C₆-C₁₂-Arylgruppe stehen
oder
zwei oder mehr der Reste R¹ bis R⁴ gemeinsam miteinander eine 4-, 5- oder 6-gliedrige Alkylenkette bilden oder zusammen mit einem Stickstoffatom oder einem Phosphoratom einen 5-oder 6-gliedrigen Ring bilden, der noch ein zusätzliches Stickstoff- oder Sauerstoffatom als Brückenglied enthalten kann oder gemeinsam ein mehrgliedriges, vorzugsweise sechsgliedriges Mehrringsystem, vorzugsweise Zweiringsystem bilden, das noch ein oder mehrere zusätzliche Stickstoffatome, Sauerstoffatome oder Stickstoff- und Sauerstoffatome als Brückenglieder enthalten kann und
R⁵ und R⁶ zusätzlich Wasserstoff, gegebenenfalls durch ein oder mehrere Sauerstoff- und/oder Schwefelatome und/oder ein oder mehrere substituierte oder unsubstituierte Iminogruppen unterbrochene oder durch funktionelle Gruppen, Aryl, Alkyl, Aryloxy, Alkyloxy, Halogen, Heteroatome und/oder Heterocyclen substituierte C₁-C₂₀-Alkyl oder C₆ bis C₁₂-Aryl
sein können.

3. Verfahren nach Anspruch 2, **dadurch gekennzeichnet, dass** die Reste R¹ bis R⁴ unabhängig voneinander ausgewählt sind aus der Gruppe bestehend aus Methyl, Ethyl, n-Propyl, Isopropyl, n-Butyl, tert.-Butyl, Phenyl und Benzyl.

4. Verfahren nach Anspruch 2 oder 3, **dadurch gekennzeichnet, dass** die Reste R⁵ und R⁶ unabhängig voneinander ausgewählt sind aus der Gruppe bestehend aus Wasserstoff, Methyl, Ethyl, n-Propyl, n-Butyl, tert.-Butyl, Cyclohexyl, Phenyl, 2-Carboxyethyl, 2-Hydroxyethyl und 2,4,4-Trimethylpentyl.

5. Verfahren nach Anspruch 1 oder 2, **dadurch gekennzeichnet, dass** das Ammonium- oder Phosphoniumkation ausgewählt ist aus der Gruppe bestehend aus Tetraoctylammonium, Tetramethylammonium, Tetraethylammonium, Tetra-n-butylammonium, Trimethylbenzylammonium, Triethylbenzylammonium, Tri-n-butylbenzylammonium, Trimethylethylammonium, Tri-n-butylethylammonium, Triethylmethylammonium, Tri-n-butylmethylammonium, Di-iso-Propyl-diethylammonium, Di-iso-Propyl-ethyl-methylammonium, Di-iso-Propyl-ethyl-benzylammonium, N,N-Dimethylpiperidinium, N,N-Dimethylmorpholinium, N,N-Dimethylpiperazinium N-Methyl-diazabicyclo[2,2,2]octan, Tetraoctylphosphonium, Tetramethylphosphonium, Tetraethylphosphonium, Tetra-n-butylphosphonium, Trimethylbenzylphosphonium, Triethylbenzylphosphonium, Tri-n-butylbenzylphosphonium, Trimethylethylphosphonium, Tri-n-butylethylphosphonium, Tributyl(octyl)phosphonium, Tributyl(tetradecyl)phosphonium, Triethylmethylphosphonium, Tri-n-butylmethylphosphonium, Trihexyl(tetradecyl)phosphonium, Di-iso-Propyl-diethylphosphonium, Di-iso-Propyl-ethyl-methylphosphonium,Di-iso-Propyl-ethyl-benzylphosphonium oder Triisobutyl(methyl)phosphonium.

6. Verfahren nach Anspruch 1 oder 2, **dadurch gekennzeichnet, dass** das Phosphinatanion ausgewählt ist aus der Gruppe bestehend aus Diethylphosphinat, Diisobutylphosphinat, Dicyclohexylphosphinat und Bis-2,4,4-Trimethylpentylphosphinat.

7. Verfahren nach einem der vorstehenden Ansprüche, **dadurch gekennzeichnet, dass** man nach Erreichen des angestrebten Trimerisierungsgrads den Trimerisierungskatalysator desaktiviert.

8. Verfahren nach Anspruch 7, **dadurch gekennzeichnet, dass** man den Trimerisierungskatalysator mit Dibutylphosphat oder Di-(2-ethylhexyl) phosphat desaktiviert.

9. Verfahren nach einem der vorstehenden Ansprüche, **dadurch gekennzeichnet, dass** man als Diisocyanate solche einsetzt, die einen Gesamtchlorgehalt von weniger als 100 Gew.-ppm aufweisen.

10. Verfahren nach einem der vorstehenden Ansprüche, **dadurch gekennzeichnet, dass** man als Diisocyanate 1,6-Hexamethylen-diisocyanat und/oder 1-Isocyanato-3-isocyanatomethyl-3,5,5-trimethylcyclohexan einsetzt.

11. Verwendung von mindestens einem Salz bestehend aus einem tetrasubstituirten Ammonium- oder Phosphoniumkation und einem Phosphinatanion als Trimerisierungskatalysator für Isocyanate.

12. Verwendung der gemäß einem der Ansprüche 1 bis 10 erhältlichen Polyisocyanate zur Herstellung von Polyurethan-Beschichtungen, für -Dispersionen und -Klebstoffe und als Polyisocyanatkomponente in Ein- und Zweikomponenten-Polyurethansystemen für hochwertige, wetterbeständige Polyurethan-Lacke und high-solid-Lacke.
